(19) Europäisches Patentamt

European Patent Office

Office européen des brevets

(11) EP 0 750 239 B1

(12) EUROPÄISCHE PATENTSCHRIFT

(45) Veröffentlichungstag und Bekanntmachung des Hinweises auf die Patenterteilung:
07.08.2002 Patentblatt 2002/32

(51) Int Cl.⁷: G05D 1/08

(21) Anmeldenummer: 96108827.5

(22) Anmeldetag: 03.06.1996

(54) **Vorrichtung zur Lage- und gegebenenfalls Positionsregelung eines Raumfahrzeuges sowie zugehöriges Verfahren**

Device for attitude and optionally position control of a space vehicle and method therefor

Dispositif pour le réglage d'attitude et éventuellement de position d'un engin spatial et méthode correspondante

(84) Benannte Vertragsstaaten:
DE FR GB IT

(30) Priorität: 02.06.1995 DE 19519732

(43) Veröffentlichungstag der Anmeldung:
27.12.1996 Patentblatt 1996/52

(73) Patentinhaber: Astrium GmbH
81663 München (DE)

(72) Erfinder:
• Fischer, Horst-Dieter, Dipl.-Ing.
82008 Unterhaching (DE)

• Chemnitz, Joachim, Dipl.-Ing.
81739 München (DE)
• Surauer, Michael, Dipl.-Ing.
83339 Chieming (DE)

(74) Vertreter: Ulrich, Thomas
EADS Deutschland GmbH,
LG-PM - Patente
81663 München (DE)

(56) Entgegenhaltungen:
EP-A- 0 371 344          EP-A- 0 544 295
EP-A- 0 571 239          FR-A- 2 423 808
FR-A- 2 697 651          US-A- 4 848 706

## Beschreibung

Die Erfindung betrifft eine Vorrichtung zur Lage- und gegebenenfalls Positionsregelung eines Raumfahrzeuges gemäß dem Oberbegriff des Patentanspruchs 1 sowie zugehörige Verfahren gemäß den Oberbegriffen der Patentansprüche 8 und 9.

Eine derartige Vorrichtung sowie ein derartiges Verfahren sind aus dem Artikel "Advanced Attitude- and Orbit Control Concepts for 3-Axis-Stabilized Communication and Application Satellites" von M. Surauer, H. Bittner, W. Fichter und H. D. Fischer, IFAC Symposia Series 1993, No. 12.: Automatic Control in Aerospace (1992), bekannt. Dort ist in Fig. 6.2-1 die Struktur einer Lageregelungsvorrichtung für ein Raumfahrzeug abgebildet, welche einen Regler enthält, der eingangsseitig Messsignale verarbeitet und ausgangsseitig Reglersignale abgibt. Sowohl die Mess- als auch die Reglersignale sind achsbezogen, d.h. jeweils auf die drei Hauptachsen des dem Raumfahrzeug fest zugeordneten Koordinatensystems x, y, z bezogen. Die achsbezogenen Reglersignale werden einer dort als "Actuator Command Module" bezeichneten Umwandlungseinheit zugeführt, die ihrerseits ausgangsseitig eine Anzahl von Ansteuersignalen für Lageregelungsdüsen bereitstellt, die dazu geeignet sind, positive und negative Momente um die drei Hauptachsen sowie ggf. positive und negative Kräfte längs dieser Hauptachsen zu erzeugen. Innerhalb der Umwandlungseinheit werden die eingangsseitig eingehenden Reglersignale zunächst einem Begrenzer und dann insgesamt drei ebenfalls achsbezogenen Modulatoren zugeführt, welche ausgangsseitig achsbezogene digitale Pulsfolgen erzeugen, deren Pulse die Werte 0 oder $\pm 1$ annehmen können. Diese Pulsfolgen werden in einer nachfolgenden Düsenauswahllogik in eine Anzahl von nicht negativen Ansteuersignalen für die Düsen bzw. Lageregelungstriebwerke umgewandelt, wobei im konkreten Fall vier Düsen vorgesehen sind. Dies geschieht über eine Tabellenansteuerung, welche eingangsseitig alle 27 möglichen Kombinationen der drei Modulatorausgangssignale enthält und dazu jeweils feststehende Kombinationen digitaler, düsenbezogener Ansteuersignale liefert, wie der Tabelle 5.2-2 des Artikels zu entnehmen ist.

Diese Tabellensteuerung hat jedoch den Nachteil, dass ein einziges Signaltripel am Modulatorausgang zur Umsetzung zwei aufeinanderfolgende Zeitintervalle mit möglicherweise unterschiedlicher Düsenansteuerung benötigt, was im Hinblick auf die zulässige Mindestimpulsdauer der Düsen eine Halbierung der an sich möglichen Reglerempfindlichkeit bedeutet. Außerdem liegt in der Tatsache, dass drei achsbezogene Modulatoren verwendet werden, ein gewisser Mangel an Flexibilität, da es so nicht möglich ist, eine genaue Abstimmung der Eigenschaften des Modulationsverfahrens auf die Erfordernisse der einzelnen Düsen bzw. Lageregelungstriebwerke vorzunehmen, was unter Umständen erwünscht sein kann.

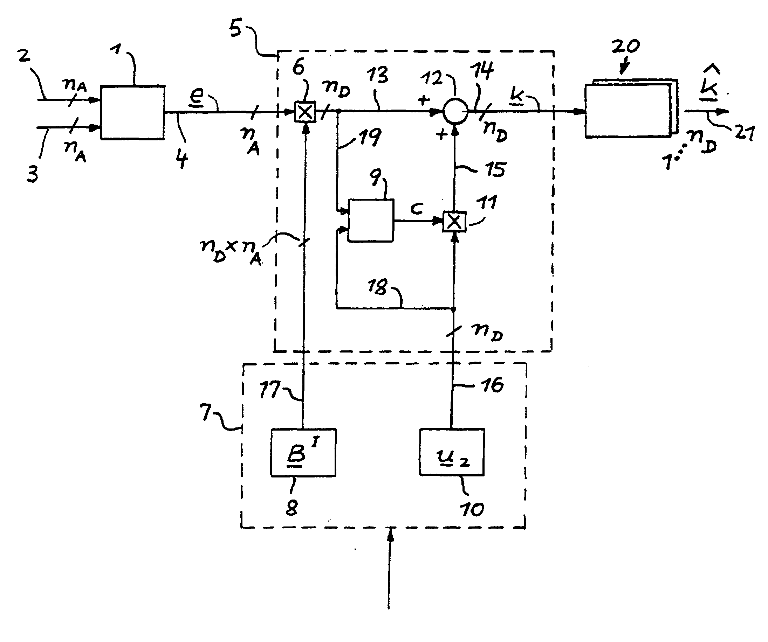

US 4,848,706 beschreibt eine Umwandlung von Reglersignalen in Ansteuersignale, die zur Ansteuerung von Lageregelungstriebwerken dienen. Allerdings werden hierbei die Lageregelungstriebwerke jeweils paarweise angesteuert, wie dort aus Fig. 1 entnehmbar ist. Folglich müssen bei diesem Stand der Technik zur reinen Lageregelung 6 Lageregelungstriebwerke vorgesehen werden. Entsprechendes gilt für eine Positionsregelung des Raumfahrzeuges. Schließlich weist die Lehre der US 4,848,706 den Nachteil auf, dass die Ansteuerung bezüglich zweier Achsen (Y, Z) gekoppelt erfolgt, die Regelung um diese beiden Achsen also nicht voneinander unabhängig ansteuerbar ist.

Der Erfindung liegt die Aufgabe zugrunde, eine Vorrichtung der eingangs genannten Art bereitzustellen, die hinsichtlich der Flexibilität und Reglerempfindlichkeit verbessert ist und die mit einem geringeren baulichen Aufwand realisiert werden kann.

Diese Aufgabe ist im Hinblick auf eine Vorrichtung zur Lageregelung bezüglich drei Hauptachsen und zur Positionsregelung durch die Merkmale des Patentanspruchs 1 gelöst:

Anspruch 1 umfasst eine Vorrichtung zur Lageregelung eines Raumfahrzeugs bezüglich der drei Hauptachsen eines dem Raumfahrzeug fest zugeordneten Koordinatensystems und zur Positionsregelung des Raumfahrzeuges,

- mit einem aus achsbezogenen Messsignalen $n_A$ achsbezogene Reglersignale erzeugenden Regler,

- mit $n_D$ Lageregelungstriebwerken zur Erzeugung von positiven und negativen Momenten um die drei Hauptachsen und zur Erzeugung von positiven und negativen Kräften längs der Hauptachsen,

- mit einer Umwandlungseinheit zur Erzeugung von den Lageregelungstriebwerken zugeordneten, nicht negativen Ansteuersignalen aus den achsbezogenen Reglersignalen,

wobei die Umwandlungseinheit Rechenglieder enthält, die die $n_A$ achsbezogenen Reglersignale in $n_D$ Ansteuersignale, die jeweils genau einem Lageregelungstriebwerk zugeordnet sind, umwandeln und an einem Ausgang der Umwandlungseinheit zur Weiterleitung an die Lageregelungstriebwerke bereitstellen.

Weiterhin umfasst die Erfindung ein Verfahren zur Lageregelung eines Raumfahrzeuges bezüglich der drei Hauptachsen eines dem Raumfahrzeug fest zugeordneten Koordinatensystems, mit den Schritten:

- Erzeugung von $n_A$ achsbezogenen Reglersignalen aus achsbezogenen Messsignalen

- Erzeugung von $n_D$ Lageregelungstriebwerken zugeordneten, nicht negativen Ansteuersignalen aus den achsbezogenen Reglersignalen,

Erzeugung von positiven und negativen Momenten um die drei Hauptachsen mit Hilfe von Lageregelungstriebwerken,

wobei aus den $n_A$ achsbezogenen Reglersignalen $n_D$ Ansteuersignale berechnet werden und je eines der $n_D$ Ansteuersignale je einem der $n_D$ Lageregelungstriebwerke zugeleitet wird.

Schließlich beinhaltet die Erfindung ein Verfahren zur Positionsregelung eines Raumfahrzeuges, mit den Schritten:

- Erzeugung von $n_A$ achsbezogenen Reglersignalen aus achsbezogenen Messsignalen

- Erzeugung von $n_D$ Lageregelungstriebwerken zugeordneten, nicht negativen Ansteuersignalen aus den achsbezogenen Reglersignalen,

- Erzeugung von positiven und negativen Kräften längs der Hauptachsen mit Hilfe von Lageregelungstriebwerken,

wobei aus den $n_A$ achsbezogenen Reglersignalen $n_D$ Ansteuersignale berechnet werden und je eine der $n_D$ Ansteuersignale je einem der $n_D$ Lageregelungstriebwerke zugeleitet wird.

In der eingangs genannten, in dem erwähnten Artikel beschriebenen Vorrichtung kommt ein Verfahren zur Erzeugung von Ansteuersignalen für die Düsen bzw. Lageregelungstriebwerke zum Einsatz, welches von den achsbezogenen Reglersignalen ausgeht und nach einer Vorschrift arbeitet, welche die Anwendung einer Matrixzerlegung nach der an sich bekannten Methode der Singular Value Decomposition (SVD) auf eine Düsenmatrix voraussetzt, die wiederum als Elemente die von den Düsen- bzw. Lageregelungstriebwerken erzeugbaren Momenten- und Kraftvektoren enthält. Dies ist in dem Artikel im Kapitel 5.2.1 näher dargelegt, insbesondere unter der Teilüberschrift "Torque Generation Logic". Die dortige Vorgehensweise führt direkt zu der oben erwähnten Tabellenansteuerung und berücksichtigt die Tatsache, dass die achsbezogenen Reglersignale vor Erzeugung der düsenbezogenen Ansteuersignale den drei ebenfalls achsbezogenen Modulatoren zugeführt werden, so dass die eigentliche Berechnung der Ansteuersignale von dem diskreten Signaltripel an den Modulatorausgängen, d.h. dem Modulator-Ausgangsvektor, ausgeht. Demgemäss tritt in der Rechenvorschrift, die aus der Anwendung der genannten Matrixzerlegung resultiert, der achsbezogene, aus diskreten Komponenten bestehende Modulator-Ausgangsvektor auf.

Gemäß einer Weiterbildung der Erfindung wird dieses Verfahren nun so modifiziert, dass die oben erwähnten Nachteile nicht mehr auftreten. Dies geschieht gemäß dem kennzeichnenden Teil des Patentanspruchs 12 dadurch, dass in der Rechenvorschrift zur Bestimmung des aus den Ansteuersignalen als Komponenten bestehenden Ansteuervektors nicht mehr ein Modulator-Ausgangsvektor, sondern vielmehr direkt der Vektor der achsbezogenen Reglersignale herangezogen wird, wobei letzterer dann mit der aus der SVD-Matrixzerlegung resultierenden Ansteuermatrix zu multiplizieren ist.

In der bekannten Lageregelungsvorrichtung gemäß dem eingangs zitierten Artikel werden stets gepulst betriebene Düsen verwendet. Dies folgt aus der dort angesprochenen Verwendung von Modulatoren.

Gemäß einem weiteren Aspekt der Erfindung ist vorgesehen, dass auch kontinuierlich steuerbare Düsen bzw. Lageregelungstriebwerke verwendet werden können, wobei die etwa nach einem vorgenannten Verfahren erzeugten Ansteuersignale direkt zur Betätigung des jeweiligen Schubsteuerungsmechanismus der diesen Ansteuersignalen fest zugeordneten Düsen bzw. Lageregelungstriebwerke herangezogen werden.

Unter Düsen werden solche Lageregelungstriebwerke verstanden, welche mit chemischen Treibstoffen arbeiten und vorwiegend für den gepulsten Betrieb ausgebildet sind, wobei je nach Ansteuerung Ventile ganz geöffnet oder geschlossen sind. Derartige Ventile können aber auch so ausgebildet sein, dass sie gemäß einer vorgegebenen Kennlinie kontinuierlich variierbare Zwischenstellungen einnehmen und somit auch für kontinuierliche Ansteuerungen geeignet sind. Weiterhin sind elektrische Lageregelungstriebwerke, beispielsweise Ionentriebwerke, von Interesse, bei denen der erzeugbare Schub ebenfalls kontinuierlich variierbar ist.

Eine Weiterbildung eines Verfahrens zur Bestimmung der Ansteuersignalen für gepulste oder kontinuierlich ansteuerbare Düsen, die in der unten beschriebenen Weise auf einem Satelliten oder Raumfahrzeug angeordnet sind, besitzt folgende Eigenschaften:

- Die Anzahl der Ansteuersignale ist gleich der Mindestanzahl $n_D$ der verwendeten Düsen;

- jedes der $n_D$ Ansteuersignale ist genau einer Düse des Düsensatzes (Minimalumfang $n_D$) zugeordnet;

- die Ansteuersignale sind nicht negativ entsprechend der Tatsache, dass die Schubrichtung einer Düse nicht umkehrbar ist;

- die Berechnung der Ansteuersignale erfolgt aus $n_A$ achsbezogenen Kommandosignalen mittels einer Matrix $\underline{B}$ der Dimension $n_D \times n_A$ und eines Vektors $\underline{u}2$ der Dimension $n_D$, gemäß der weiter unten folgenden Beschreibung; die vom Berechnungsverfahren benötigten Parameter $\underline{B}$ und $\underline{u}2$ sind im Bordrechner gespeichert und vom Boden aus überschreibbar, oder es können mehrere Sätze dieser Parameter gespeichert sein, z.B. für folgende Fälle: Umschaltung der Ansteuersignale auf redundante Düsen mit anderen Momenten- (und Kraft-)vektoren, oder Berücksichtigung bekannter Änderungen des Fahrzeugschwerpunktes oder des Schubniveaus einzelner Düsen;

- im Falle gepulster Düsen wird jedes der $n_D$ Ansteuersignale genau einem der entsprechenden Düse zugeordneten Modulationsverfahren bzw. Modulator zugeführt;

Eine Weiterbildung eines vorgeschlagenen Ansteuerverfahren benutzt eine Anordnung von gepulsten oder kontinuierlich ansteuerbaren Düsen zur Erzeugung von Momenten oder Momenten und Kräften auf Satelliten oder Raumfahrzeuge, die durch folgende Eigenschaften gekennzeichnet ist:

- die Mindestanzahl $n_D$ der Düsen ist um eins größer als die Anzahl $n_A$ der umzusetzenden, achsbezogenen Stellkommandos, welche den auszuübenden Momenten um die drei Satelliten-Hauptachsen entsprechen; zusätzlich können auch Kräfte längs dieser Hauptachsen kommandiert werden; somit ist $n_A \leqq 6$;

- die geometrische Anordnung der Düsen auf dem Satelliten oder Raumfahrzeug erlaubt das Erzeugen von positiven und negativen Momenten um bis zu drei Hauptachsen sowie gegebenenfalls von positiven und negativen Kräften in Richtung von bis zu drei Hauptachsen;

- für den Sonderfall $n_D \leq 4$ (zusätzliche Eigenschaft) gilt: die betragsmäßig größten Kraftkomponenten von mindestens $n_D$ Düsen weisen in die gleiche Richtung, die Vorzugsrichtung für Schub bei Bahnkorrekturmanövern und gleichzeitiger Erzeugung von Momenten um $n_A = n_D - 1$ Achsen.

Für die Lage- (und Positions-)regelung von Satelliten oder Raumfahrzeugen mittels Düsen werden üblicherweise aus Messsignalen mittels geeigneter Algorithmen Reglersignalen $\underline{e}$ erzeugt, die, mit einer gewünschten Momentenmatrix $\underline{T}_{cmd}$ (und Kraftmatrix $\underline{F}_{cmd}$) multipliziert, Kommandovektoren $\underline{t}_{cmd}$ (und $\underline{f}_{cmd}$) ergeben, die wiederum den von den Düsen zu erzeugenden Momenten (und Kräften) entsprechen.

Diese achsbezogenen Kommandosignale sind in düsenbezogene, nicht negative Ansteuersignalen $\underline{k}$ umzuwandeln, die dem momentan im Mittel zu erzeugenden Schubniveau der jeweiligen Düse proportional sind.

Zwischen den gesuchten Ansteuersignalen $\underline{k}$ für die Düsen und den von diesen erzeugten Kräften und Momenten besteht folgender Zusammenhang:

$$\underline{z}_{ges} = \begin{pmatrix} \underline{t} \\ \underline{f} \end{pmatrix} = \begin{pmatrix} \underline{T} \\ \underline{F} \end{pmatrix} \cdot \underline{k} = \begin{pmatrix} \cdots & \widetilde{\underline{r}}_i \underline{f}_i & \cdots \\ \cdots & \underline{f}_i & \cdots \end{pmatrix} \cdot \underline{k}, \; i = 1 \ldots n_D \tag{1}$$

oder zusammengefasst:

$\underline{Z}_{ges} := \underline{B}_{ges} \cdot \underline{k}$
mit
$\underline{Z}_{ges}$ : zusammengefasster Momenten- und Kraftvektor,
$\underline{t}$ : von den Düsen ausgeübtes mittleres Moment,
$\underline{f}$ : von den Düsen ausgeübte mittlere Kraft,
$\underline{f}_i$ : Kraftvektor der Düse i,
$\underline{r}_i$ : Ortsvektor der Düse i, bezogen auf den Massenmittelpunkt,
$\widetilde{\underline{r}}_i \underline{f}_i = \underline{r}_i \times \underline{f}_i$.
$\underline{k}_i$ : Ansteuersignal der Düse i.

Gesucht ist nun ein Ansteuervektor $\underline{k}$, der alle Elemente von $\underline{z}_{ges}$ oder eine ausgewählte Teilmenge $\underline{z}$ davon einem vorgegebenen Kommandovektor $\underline{z}_{cmd}$ möglichst gleich macht:

$$z_j = z_{cmd.j} \cdot j = 1 .. n_A, \, n_A \leq 6 \qquad (2)$$

Hierbei kann $\underline{z}_{cmd}$ dargestellt werden als das Produkt des $n_A$-elementigen Reglerausgangssignals $\underline{e}$ mit einer gewünschten Momenten/Kraft-Matrix $\underline{B}_{cmd}$. Hierdurch läßt sich Gl. (2) wie folgt schreiben:

$$\underline{B}_{cmd}\underline{e} = \underline{B} \, \underline{k} \qquad (3)$$

Hierbei ist entweder $\underline{B} = \underline{B}_{ges}$, oder $\underline{B}$ entsteht aus $\underline{B}_{ges}$ durch Streichen der denjenigen Elementen von $\underline{z}_{ges}$ entsprechenden Zeilen, für die kein Sollwert vorgegeben ist.

Bei Satelliten und Raumfahrzeugen wird i.a. für die Momente um alle Achsen ein Sollwert vorgegeben, um unkontrollierte Drehungen zu vermeiden. Üblicherweise gilt somit $n_A \geq 3$. Für die Elemente von $\underline{k}$ in (3) gilt die Randbedingung

$$k_i \geq 0, \, i = 1 ... n_D \qquad (4)$$

Dies entspricht der Tatsache, dass die Düsen nur Schub in einer Richtung erzeugen können.

Die minimale Anzahl von Düsen, für die die Gleichungen (3) und (4) überhaupt erfüllt werden können, ist

$$n_D = n_A + 1 \qquad (5)$$

Das vorgeschlagene Verfahren erzeugt genau $n_D$ Ansteuersignale. Es verwendet eine Methode der Matrixzerlegung (Singular Value Decomposition = SVD, beispielsweise bekannt aus IEEE Transactions on Automatic Control, Vol. AC-25, No. 2, April 1980, Seiten 164 bis 176), mit der sich die Düsenmatrix $\underline{B}$ in (3) darstellen lässt als

$$\underline{B} = \underline{V} \left( \sum , \underline{0} \left( \begin{array}{c} \underline{U1}^T \\ \underline{U2}^T \end{array} \right) \right) \qquad 6)$$

Für den hier beschriebenen Fall, $n_D = n_A + 1$, ist $\underline{U2}$ ein Vektor der Dimension $n_D$, im folgenden bezeichnet als $\underline{u}2$. Ist $\underline{u}2$ definit, enthält es also nur Komponenten gleichen Vorzeichens, dann wird der Ansteuervektor $\underline{k}$ folgendermaßen bestimmt:

$$\underline{k} = \underline{B}^I \cdot \underline{e} + c \cdot \underline{u}2 \qquad (7a)$$

$$c = - \min_i \{ (\underline{B}^I \underline{e})_i / u2_i \} \qquad (7b)$$

mit

$$\underline{B}^I = \underline{U1} \, \Sigma^{-1} \cdot \underline{V}^T \cdot \underline{B}_{cmd} \qquad (8)$$

Die Definitheit des Vektors $\underline{u}2$ in Gln. (6) und (7) ist die einzige Forderung an die Düsenmatrix $\underline{B}$, damit das hier beschriebene Verfahren angewandt werden kann. Sie entspricht der Tatsache, dass der Düsensatz in der Lage ist, positive und negative Momente um sowie gegebenenfalls positive und negative Kräfte längs der jeweils geforderten Hauptachsen von Raumfahrzeug bzw. Satellit zu erzeugen.

Insbesondere setzt das hier beschriebene Verfahren keinerlei Symmetrieeigenschaften des Düsensatzes voraus (z.B. dass Paare von Düsen jeweils entgegengesetzte Momente gleichen Betrags um eine Hauptachse erzeugen müssen).

Andererseits kann es bei Nichtdefinitheit von $\underline{u}2$ kein Verfahren geben, das zur Ansteuerung von Düsensätzen der hier verwendeten Art geeignet wäre, d.h. das die Forderungen (2) und (4) erfüllen könnte.

Das Verfahren wird vorzugsweise im Bordrechner des betreffenden Satelliten oder Raumfahrzeuges implementiert, wo auch die Matrix B' sowie der Vektor $\underline{u}2$ aus Gl. (7) abgespeichert sind.

Die Parameter $\underline{B}^I$ und $\underline{u}2$ sind vom Boden aus per Telekommando überschreibbar, um sie Änderungen der Düsenmatrix $\underline{B}$ anzupassen. Diese können z.B. entstehen durch:

- Änderung des Massenmittelpunktes im Betrieb,

- Änderung des Schubniveaus der Düsen, oder

- Umschaltung auf Düsen mit anderer Einbaugeometrie.

Hierbei bewirkt Gl. (7b), dass alle Ansteuersignale nicht negativ sind. Das Ansteuergesetz nach Gl. (7) erfüllt somit die Forderungen (2) und (4).

Das vorgeschlagene Verfahren erzeugt gemäß einer speziellen Weiterbildung eine Anzahl $n_D$ von Ansteuersignalen, die um eins größer ist als die Anzahl der achsbezogenen Momenten- und Kraftkommandos $n_A$. Im einfachsten Fall ist somit die Anzahl der verwendeten Düsen gleich $n_D$. Es können jedoch auch mehr als $n_D$ Düsen verwendet werden, z.B. in folgenden Fällen:

- Zur Erhöhung des Momenten- bzw. Schubniveaus können mehrere Düsen mit ähnlichem Momenten- und Kraftvektor zusammengefasst und einem Ansteuersignal $k_i$ zugeordnet werden, wobei dann in Gleichung (3) in der entsprechenden Spalte der Matrix $\underline{B}$ die Mittelwerte der relevanten Elemente der Momenten- (und Kraft-)Vektoren der zusammengefassten Düsen einzusetzen sind;

- zur Erhöhung der Redundanz können Elemente des Vektors $\underline{k}$ wahlweise zur Ansteuerung verschiedener Düsen mit ähnlichem Momenten- und Kraftvektor verwendet werden, oder der Vektor $\underline{k}$ kann zur Ansteuerung eines anderen Düsensatzes mit insgesamt ähnlichen Eigenschaften verwendet werden; in beiden Fällen müssen gegebenenfalls die Werte der Parameter $\underline{B}^I$ und $\underline{u}2$ über Telekommandos angepasst oder durch für den jeweiligen Düsensatz im voraus berechnete und im Bordrechner abgespeicherte Werte ersetzt werden.

Bei Verwendung von gepulsten Düsen wird jedes der ermittelten Ansteuersignale genau einem Modulator zugeführt. Die Modulatoren können digital im Bordrechner oder analog realisiert sein. Das Ausgangssignal eines jeden Modulators wird in geeigneter Weise zur Betätigung des Ventils (der Ventile) der diesem Modulator fest zugeordneten Düse (Gruppe von Düsen mit ähnlichem Momenten- und Kraftvektor) verwendet.

Bei Verwendung von kontinuierlich steuerbaren Düsen wird jedes der ermittelten Ansteuersignale in geeigneter Weise zur Betätigung des Schubsteuerungsmechanismus der diesem Ansteuersignal fest zugeordneten Düse (Gruppe von Düsen mit ähnlichem Momenten- und Kraftvektor) verwendet.

Weisen die betragsmäßig größten Kraftkomponenten von mindestens $n_D \leq 4$ Düsen in die gleiche Richtung, so kann in diese Richtung ein Dauerschub ausgeübt werden bei gleichzeitiger Erzeugung von kommandierten Momenten um $n_D-1$ Achsen.

Für $H_D = 4$, sind so z.B. Bahnkorrekturmanöver bei gleichzeitiger Lageregelung möglich.

Für diesen Sonderfall ist die Berechnungsvorschrift des Skalas c in Gl. (7b) wie folgt zu erweitern:

Fall a), gültig außerhalb von Schubphasen oder während Schubphasen, falls $c_m \leq c_o$ ($c_m$ siehe Fall b):

$$c = c_o := - \min_{i} \{ (\underline{B}^I \underline{e})_i / u2_i \} \qquad (9a)$$

Fall b), gültig während Schubphasen, falls $c_m > c_o$:

$$c = c_m := \min_i \{1-(\underline{B}^I \underline{e})_i \, /u2_i \} \qquad (9b)$$

Im Fall a) wird die Unbestimmtheit des Gleichungssystems (1) genutzt, um die Forderungen (2) und (4) mit minimalem Energieaufwand zu erfüllen (mindestens einer Düse wird der Ansteuerwert Null zugeordnet), im Fall b) geschieht dies mit maximalem Energieaufwand (mindestens einer Düse wird der maximale Ansteuerwert zugeordnet).

Im folgenden ist die Erfindung anhand der einzigen Figur näher erläutert. Sie zeigt in schematischer Weise ein Blockschaltbild einer Ausführungsform der erfindungsgemäßen Vorrichtung.

Dabei werden einem Regler 1 eingangsseitig über Zuleitungen 2 und 3 Messsignale $\underline{u}_m$, welche die Lage und ggf. Position sowie die Drehrate und ggf. Geschwindigkeit des Raumfahrzeuges repräsentieren, sowie Sollwerte $\underline{u}_r$ für $\underline{u}_m$ zugeführt. Diese Messsignale bzw. Sollwerte sind achsbezogen, d.h. auf die drei Hauptachsen des dem Raumfahrzeug fest zugeordneten Koordinatensystems x, y, z bezogen. Dies ist bei jeder der beiden Leitungen 2 und 3 durch die Angabe der Vektordimension $n_A$ angedeutet. Der Regler 1 erzeugt nach einem vorgegebenen Algorithmus ausgangsseitig einen Vektor $\underline{e}$ von Reglersignalen, welcher ebenfalls die Dimension $n_A$ besitzt. Die Reglersignale werden über eine Leitung 4 einem Multiplikationsglied 6 zugeführt, welches noch über eine Leitung 17 eine Matrix $\underline{B}^I$ des Typs $n_D \times n_A$ empfängt. Das Multiplikationsglied 6 ist Teil einer Umwandlungsvorrichtung 5, welche als weitere Funktionsglieder noch ein Additionsglied 12, ein weiteres Multiplikationsglied 11 sowie eine Rechenvorrichtung 9 enthält. Die Matrix $\underline{B}^I$ wird einem Teilspeicher 8 entnommen, welcher zu einem Speicher 7 gehört, der noch in einem weiteren Teilspeicher 10 einen Vektor $\underline{u}_2$ enthält, welcher ebenso wie die Matrix $\underline{B}^I$ aus einer SVD-Matrixzerlegung resultiert, siehe weiter oben die Gleichungen (6) sowie (8). Durch einen Pfeil 22 ist angedeutet, dass der ebenso wie die Umwandlungsvorrichtung 5 im Raumfahrzeug angeordnete Speicher 7 über Telekommando beispielsweise von einer Bodenstation aus überschrieben werden kann. Die in den Teilspeichern 8 und 10 enthaltenen Parametergrößen können demnach bei Bedarf, wie oben bereits angedeutet, jederzeit geändert werden und stehen dann den weiteren Berechnungen in der Umwandlungsvorrichtung 5 zur Verfügung. Nach Multiplikation der beiden erwähnten Eingangsgrößen $\underline{e}$ und $\underline{B}^I$ des Multiplikationsgliedes 6 erscheint an dessen Ausgang ein vektorielles Signal der Dimension $n_D$. Dieses enthält also so viele Komponenten, wie anzusteuernde Düsen ($n_D$) vorhanden sind. Die Leitung 13 führt somit ein Signal, welches dem ersten Summanden in der Gleichung (7a) entspricht. Der zweite Summand wird dem anschließenden Additionsglied 12 über eine Leitung 15 zugeführt. Auf diese wird das Ausgangssignal des Multiplikationsgliedes 11 abgegeben, welches als Eingangssignale einmal die in der Recheneinheit 9 berechnete Konstante c und zum anderen den aus dem Teilspeicher 10 entnommenen Vektor $\underline{u}_2$ der Dimension $n_D$ empfängt. Der Recheneinheit 9 werden als Eingangssignale einmal über Leitung 19 der erste Summand der Gleichung (7a) und zum anderen über eine Leitung 18 der erwähnte Vektor $\underline{u}_2$ zugeführt. Das Ausgangssignal der Recheneinheit 9, nämlich die Konstante c wird in dieser Recheneinheit nach den Vorschriften der Gleichungen (7b) bzw. (9a) oder (9b) berechnet.

Damit steht auf der Ausgangsleitung 4 des Additionsgliedes 12 ein vektorförmiges Signal der Dimension $n_D$ zur Verfügung, nämlich der gewünschte Ansteuervektor $\underline{k}$, dessen Komponenten $k_i$ die gewünschten Ansteuersignale für die $n_D$ einzelnen Düsen darstellen, allerdings noch in kontinuierlich veränderbarer Form.

Sind nun als Lageregelungstriebwerke Düsen vorgesehen, welche pulsförmig zu betreiben sind, so wird jedes einzelne der skalaren Ansteuersignale $k_i$ einem eigenen Modulator zugeführt. Der Vektor $\underline{k}$ wird also derart aufgespalten, dass jede seiner $n_D$ einzelnen Komponenten einem anderen Modulator einer Modulatorgesamtheit 20 zugeführt wird, die aus insgesamt $n_D$ einzelnen Modulatoren besteht, deren jeder einer anderen der $n_D$ Düsen zugeordnet ist. Der Modulatorgesamtheit 20 ist somit insgesamt ein Signalvektor $\underline{k}$ zu entnehmen, dessen $n_D$ Komponenten die den $n_D$ einzelnen Düsen jeweils zuzuführenden diskreten Pulsfolgen darstellen, welche bekanntermaßen die Werte 0 oder $\pm1$ annehmen können.

Im Falle von kontinuierlich ansteuerbaren Lageregelungstriebwerken entfallen die Modulatoren, und der Ansteuervektor $\underline{k}$ wird unmittelbar der Gesamtheit dieser Lageregelungstriebwerke zugeführt, und zwar derart, dass jedes dieser Triebwerke eine andere der $n_D$ Komponenten dieses Vektors als Ansteuersignal zur Betätigung ihres Schubsteuerungsmechanismus enthält.

Der Regler 1 kann vor seinem Ausgang für die $n_A$ Komponenten seines Ausgangssignals noch jeweils eine Totzone enthalten, welche in üblicher Weise dazu führt, dass nur solche Signale weitergeleitet werden, die eine per individuellem Schwellenwert vorgebbare Mindesthöhe überschreiten. Damit kann achsbezogen eine gewünschte Lagegenauigkeit vorgegeben werden. Weiterhin kann am Ausgang des Additionsgliedes 12 ein Begrenzer vorgesehen sein, welcher dafür sorgt, dass der Absolutwert des Vektors $\underline{k}$ eine vorgebbare Höhe, beispielsweise 1, nicht überschreitet. Die einzelnen Komponenten dieses Vektors werden dabei nötigenfalls proportional soweit verkleinert, dass die genannte Forderung erfüllbar ist.

Anschließend sind zwei Beispiele für die Berechnung eines Ansteuervektors $\underline{k}$ angegeben, welche die Vorgehensweise bei der Berechnung anhand konkreter Zahlenbeispiele verdeutlichen sollen.

Das **Beispiel a)**

$n_A = 3$ ; gefordert ist ein 3-achsiges Stellmoment mit $\underline{z}_{cmd} = \underline{t}_{cmd} = (t_x, t_y, t_z)$

$n_D = 4$ ; d.h. es werden 4 Düsen verwendet

$\underline{e} = (e_x, e_y, e_z)$ (achsbezogene Reglerausgangssignale)

Kräfte der Düsen, $\underline{F} = (\underline{f}_1 .. \underline{f}_4)$ gem. (1):

$$\underline{F} = \begin{pmatrix} 0.93102 & 0.92758 & 0.95368 & 0.95619 \\ 0.06 & -0.1 & -0.08 & 0.04 \\ -0.36 & -0.36 & 0.29 & 0.29 \end{pmatrix} \qquad [N]$$

Einbauorte der Düsen, $\underline{L} = (\underline{l}_1 .. \underline{l}_4)$:

$$\underline{L} = \begin{pmatrix} -0.889 & -0.889 & -0.889 & -0.889 \\ 0.448 & -0.448 & 0.574 & -0.574 \\ 0.605 & 0.605 & 0.477 & 0.477 \end{pmatrix} \qquad [m]$$

mittlerer Schwerpunkt des Satelliten:

$$\underline{c} = (0.036\ {-}0.018\ 0.507) \qquad\qquad [m]$$

Hieraus folgt die Matrix der erzeugbaren Düsenmomente, $\underline{B} = \underline{T} = (... \tilde{\underline{r}}_i \underline{f}_i ...)$ gemäß (1), mit $\underline{r}_i = \underline{l}_i - \underline{c}$, i = 1..4:

$$\underline{B} = \begin{pmatrix} -0.1736 & 0.1646 & 0.1693 & -0.1600 \\ -0.2418 & -0.2421 & 0.2396 & 0.2396 \\ -0.4894 & 0.4914 & -0.4906 & 0.4946 \end{pmatrix} \qquad [Nm]$$

oder näherungsweise:

$$\underline{B} \approx \left[ 2 \begin{pmatrix} 0.17 & 0 & 0 \\ 0 & 0.24 & 0 \\ 0 & 0 & 0.49 \end{pmatrix} \right] \left[ (1/2) \begin{pmatrix} -1 & 1 & 1 & -1 \\ -1 & -1 & 1 & 1 \\ -1 & 1 & -1 & 1 \end{pmatrix} \right] = [\Sigma]\ [\underline{U}_1{}^T]$$

Dies ist eine "ideale" Momentanmatrix, da die Komponenten in einer Achse für alle Düsen dem Betrag nach gleich sind. Daher lassen sich hieraus direkt die Elemente der Matrixzerlegung

$$\Sigma. \underline{U}_1^T, \text{ und } \underline{V} = \underline{I}, \text{ gem.} \qquad \text{gem.(6)}$$

ablesen. Der Vektor $\underline{u}2$ ergibt sich durch orthogonale Ergänzung von $\underline{U}1$ (Bedingungen: $|\underline{u}_2| = 1$, $u_j^T u_2 = 0$ für $j = 1..3$) zu

$$\underline{u}_2^T = (1/2)\ (1\ 1\ 1\ 1).$$

Als "gewünschte Momentanmatrix" $\underline{B}_{cmd}$ gem. (3) wählt man Sinnvollerweise die Diagonalmatrix der Momente, die von einer Düse in einer Achse aufgebracht werden können, also

$$\underline{B}_{cmd} = (1/2)\Sigma = \text{diag}\ \{0.17\ 0.24\ 0.49\} \qquad [\text{Nm}].$$

Damit ergibt sich als Ansteuermatrix gem. (8):

$$\underline{B}^I \quad = \quad (1/2)\,\underline{U}_1 = (1/4) \begin{pmatrix} -1 & -1 & -1 \\ 1 & -1 & 1 \\ 1 & 1 & -1 \\ -1 & 1 & 1 \end{pmatrix}$$

Bei einem Reglerausgangssignal von z.B. $\underline{e} = (1\ 1\ 1)^T$ erhält man z.B. für "on-Modulation" (d.h. kein Schub in Vorzugsrichtung der Düsen):

$\underline{B}^I\underline{e} = (1/4)\ (-3\ 1\ 1\ 1)$, c $= 3/2$ (nach(7b) bzw. 9a)),
$\underline{k} = (0\ 1\ 1\ 1\ 1)^T$; hieraus resultiert ein mittleres Moment der Düsen von

$$\underline{z} = (0.17\ 0.24\ 0.49)^T \qquad [\text{Nm}]$$

Im obigen Beispiel ist eine Bestimmung von c nach (9b) nicht möglich, da der Reglerausgang bereits maximalen Schub in Vorzugsrichtung der Düsen erzwingt, d.h. das größte Element von $\underline{k}$ bereits gleich 1 ist.
I.a. lässt sich jeder Wert von c, der zwischen denen aus (9a) und (9b)
liegt, zur Ansteuerung gem. (7a) verwenden. Dies entspricht einem kontinuierlich zwischen Minimum und Maximum steuerbaren Schub in der Haupt-Kraftrichtung der Düsen.

**Beispiel b)**

Eine ideale Momentanmatrix wie in Beispiel a) ist meist das Ergebnis einer sorgfältig gewählten Düseneinbaugeometrie unter Berücksichtigung des Satellitenschwerpunktes. Bei Schwerpunktswanderungen im Verlauf einer Mission lassen sich Abweichungen von der idealen Momentenmatrix nicht vermeiden. So erhält man z.B. mit der Düseneinbaugeometrie von Beispiel a), jedoch mit dem Schwerpunkt

$$\underline{c} = (0.34\ -0.017\ 0.468)^T \qquad [\text{Nm}],$$

die Momentenmatrix

$$\underline{B} \quad = \quad \begin{pmatrix} -0.1756 & 0.1689 & 0.1721 & -0.1619 \\ -0.2047 & -0.2052 & 0.2763 & 0.2763 \\ -0.4883 & 0.4921 & -0.4898 & 0.4957 \end{pmatrix} \qquad [\text{Nm}].$$

Hierfür erhält man die Elemente der SVD gem. (6) sowie die Ansteuermatrix $\underline{B}^I$ gem. (8) wie folgt:

$$\underline{U}_1^T = \begin{pmatrix} -0.49783 & 0.50131 & -0.49715 & 0.50368 \\ -0.48985 & 0.51078 & 0.48695 & -0.51189 \\ 0.43151 & 0.41076 & -0.58039 & -0.55518 \end{pmatrix}$$

$$\Sigma = \text{diag} \{0.98298 \ 0.33916 \ 0.48665\} \qquad \text{[Nm]}$$

$$\underline{V} = \begin{pmatrix} 5.0716E-3 & 9.9942E-1 & -3.3695E-2 \\ 8.5953E-4 & -3.3699E-2 & -9.9943E-1 \\ 1.0 & -5.0398E-3 & 1.0299E-3 \end{pmatrix}$$

$$E-x = 10^{-x}$$

$$\underline{u}_2 = (0.57097 \quad 0.56486 \quad 0.42293 \quad 0.41958)^T$$

$$\underline{B}^I = \begin{pmatrix} -0.25090 & -0.20111 & -0.24913 \\ 0.25147 & -0.21453 & 0.25163 \\ 0.25033 & 0.27453 & -0.25711 \\ -0.24945 & 0.28595 & 0.25942 \end{pmatrix}$$

Für $\underline{B}_{cmd}$ gem. (3) wurden hier folgende Werte gewählt:

$$\underline{B}_{cmd} = \text{diag.} \{0.17 \ 0.24 \ 0.50\} \qquad \text{[Nm]}.$$

**Patentansprüche**

1. Vorrichtung zur Lageregelung eines Raumfahrzeugs bezüglich der drei Hauptachsen eines dem Raumfahrzeug fest zugeordneten Koordinatensystems und zur Positionsregelung des Raumfahrzeuges,

   - mit einem aus achsbezogenen Messsignalen $n_A$ achsbezogene Reglersignale erzeugenden Regler (1),

   - mit $n_D$ Lageregelungstriebwerken zur Erzeugung von positiven und negativen Momenten um die drei Hauptachsen und zur Erzeugung von positiven und negativen Kräften längs der Hauptachsen,

   - mit einer Umwandlungseinheit (5) zur Erzeugung von den Lageregelungstriebwerken zugeordneten, nicht negativen Ansteuersignalen aus den achsbezogenen Reglersignalen,

   **dadurch gekennzeichnet,**
   **dass** die Umwandlungseinheit (5) Rechenglieder (6, 9, 11, 12) enthält, die die $n_A$ achsbezogenen Reglersignale in $n_D$ Ansteuersignale, die jeweils genau einem Lageregelungstriebwerk zugeordnet sind, umwandeln und an einem Ausgang (14) der Umwandlungseinheit (5) zur Weiterleitung an die Lageregelungstriebwerke bereitstellen.

2. Vorrichtung nach Anspruch 1, **dadurch gekennzeichnet, dass** $n_D=n_A+1$ Lageregelungsstriebwerke vorgesehen sind und die Rechenglieder (6, 9, 11, 12) zur Umwandlung von $n_A$ Reglersignalen in $n_D=n_A+1$ Ansteuersignale ausgebildet sind.

3. Vorrichtung nach Anspruch 1 oder 2, **dadurch gekennzeichnet, dass** die Lageregelungstriebwerke als Düsen ausgebildet sind, die für einen gepulsten Betrieb ausgelegt sind und die Umwandlungseinheit (5) mit einer Modulatorgesamtheit (20) verbunden ist, welche wiederum mit den Lageregelungstriebwerken verbunden ist, wobei die Modulatorgesamtheit (20) einzelne Modulatoren aufweist und jeweils ein Modulator einem Ansteuersignal und einem Lageregelungstriebwerk fest zugeordnet ist.

4. Vorrichtung nach Anspruch 1 oder 2, **dadurch gekennzeichnet, dass** die Lageregelungstriebwerke als Düsen ausgebildet sind, die für einen kontinuierlichen Betrieb ausgelegt sind.

5. Vorrichtung nach Anspruch 1 oder 2, **dadurch gekennzeichnet, dass** die Lageregelungstriebwerke als elektrische Lageregelungstriebwerke ausgebildet sind.

6. Vorrichtung nach einem der Ansprüche 1 bis 5, **dadurch gekennzeichnet, dass** die Umwandlungseinrichtung zur Durchführung einer Operation gemäß der Vorschrift

$$\underline{k} = \underline{B}^I \underline{e} + c\underline{u}_2$$

ausgelegt ist, wobei $\underline{k}$ der die Ansteuersignale als Komponenten enthaltende Ansteuervektor und $\underline{e}$ der die achsbezogenen Reglersingale als Komponenten enthaltende Vektor sind, und wobei weiterhin $\underline{B}^I$ eine Ansteuermatrix und $\underline{u}_2$ ein definiter Vektor sind, welche beide aus einer nach der Methode der Singular Value Decomposition (SVD) durchzuführenden Matrixzerlegung einer Düsenmatrix $\underline{B}$ resultieren, die als Elemente die von den Lageregelungstriebwerken erzeugbaren Momenten- und Kraftvektoren enthält, und schließlich c so gewählt ist, daß alle Ansteuersignale nicht negativ sind.

7. Vorrichtung nach Anspruch 6, **dadurch gekennzeichnet, dass** die Umwandlungseinrichtung einen durch Telekommando überschreibbaren Speicher zur Aufnahme der Ansteuermatrix $\underline{B}^I$ sowie des definiten Vektors $\underline{u}_2$ aufweist.

8. Verfahren zur Lageregelung eines Raumfahrzeuges bezüglich der drei Hauptachsen eines dem Raumfahrzeug fest zugeordneten Koordinatensystems, mit den Schritten:

- Erzeugung von $n_A$ achsbezogenen Reglersignalen aus achsbezogenen Messsignalen

- Erzeugung von $n_D$ Lageregelungstriebwerken zugeordneten, nicht negativen Ansteuersignalen aus den achsbezogenen Reglersignalen,

- Erzeugung von positiven und negativen Momenten um die drei Hauptachsen mit Hilfe von Lageregelungstriebwerken,

**dadurch gekennzeichnet,**
**dass** aus den $n_A$ achsbezogenen Reglersignalen $n_D$ Ansteuersignale berechnet werden und je eines der $n_D$ Ansteuersignale je einem der $n_D$ Lageregelungstriebwerke zugeleitet wird.

9. Verfahren zur Positionsregelung eines Raumfahrzeuges, mit den Schritten:

- Erzeugung von $n_A$ achsbezogenen Reglersignalen aus achsbezogenen Messsignalen

- Erzeugung von $n_D$ Lageregelungstriebwerken zugeordneten, nicht negativen Ansteuersignalen aus den achsbezogenen Reglersignalen,

- Erzeugung von positiven und negativen Kräften längs der Hauptachsen mit Hilfe von Lageregelungstriebwerken,

**dadurch gekennzeichnet,**
**dass** aus den $n_A$ achsbezogenen Reglersignalen $n_D$ Ansteuersignale berechnet werden und je eines der $n_D$ Ansteuersignale je einem der $n_D$ Lageregelungstriebwerke zugeleitet wird.

10. Verfahren nach Anspruch 8 oder 9, **dadurch gekennzeichnet, dass** eine Umwandlung der $n_A$ Reglersignalen in $n_D=n_A+1$ Ansteuersignale erfolgt.

11. Verfahren nach einem der Ansprüche 8 bis 10, **dadurch gekennzeichnet, dass** die Lageregelungstriebwerke gepulst betrieben werden und jedes der Ansteuersignale genau einem Modulator zugeführt wird, wobei der Modulator eine Modulation der Ansteuersignale zur Erzeugung von Pulsfolgen durchführt.

12. Verfahren nach einem der Ansprüche 8 bis 11, **dadurch gekennzeichnet, dass** die Ansteuersignale, die die Komponenten eines Ansteuervektors $\underline{k}$ bilden, unter Anwendung einer Vorschrift

$$\underline{k} = \underline{B}^I e + c\underline{u}_2$$

erzeugt werden, wobei eine Ansteuermatrix $\underline{B}^I$, ein definiter Vektor $\underline{u}_2$ sowie eine Konstante c aus der Anwendung einer Matrixzerlegung nach der Methode der Singular Value Decomposition (SVD) auf eine Düsenmatrix $\underline{B}$ resultieren, welche als Elemente die von den Lageregelungstriebwerken erzeugbaren Momenten- und Kraftvektoren enthält, wobei die Ansteuermatrix $\underline{B}^I$ direkt mit dem aus den achsbezogenen Reglersignalen gebildeten Vektor $\underline{e}$ multipliziert wird.

13. Verfahren nach Anspruch 12, **dadurch gekennzeichnet, dass** die Ansteuermatrix $\underline{B}^I$ sowie der definite Vektor $\underline{u}_2$ durch Telekommando überschrieben werden.


**Claims**

1. Apparatus for controlling the attitude of a space vehicle relative to the three main axes of a coordinate system fixedly associated with the space vehicle and for controlling the position of the space vehicle,

   - having a controller (1) generating $n_A$ axis-related controller signals from axis-related measurement signals,

   - having $n_D$ attitude-control propulsion units for generating positive and negative moments about the three main axes and for generating positive and negative forces along the main axes,

   - having a conversion unit (5) for generating from the axis-related controller signals non-negative actuating signals associated with the attitude-control propulsion units,

   **characterised in that**
   the conversion unit (5) contains computational components (6, 9, 11, 12) converting the $n_A$ axis-related controller signals into $n_D$ actuating signals which are each associated with exactly one attitude-control propulsion unit, and making them available at an output (14) of the conversion unit (5) for forwarding to the attitude-control propulsion units.

2. Apparatus according to claim 1, **characterised in that** $n_D=n_A+1$ attitude-control propulsion units are provided and the computational components (6, 9, 11, 12) are constructed to convert $n_A$ controller signals into $n_D=n_A+1$ actuating signals.

3. Apparatus according to claim 1 or 2, **characterised in that** the attitude-control propulsion units are in the form of nozzles that are designed for pulsed operation and the conversion unit (5) is connected to a modulator unit (20) which is in turn connected to the attitude-control propulsion units, the modulator unit (20) having individual modulators and each modulator being firmly allocated to a respective actuating signal and a respective attitude-control propulsion unit.

**4.** Apparatus according to claim 1 or 2, **characterised in that** the attitude-control propulsion units are in the form of nozzles that are designed for continuous operation.

**5.** Apparatus according to claim 1 or 2, **characterised in that** the attitude-control propulsion units are in the form of electrical attitude-control propulsion units.

**6.** Apparatus according to any one of claims 1 to 5, **characterised in that** the conversion device is designed to carry out an operation according to the precept

$$\underline{k} = \underline{B}^{I}\underline{e} + c\underline{u}_2,$$

$\underline{k}$ being the actuating vector containing the actuating signals as components and $\underline{e}$ being the vector containing the axis-related controller signals as components, and, further, $\underline{B}^{I}$ being an actuating matrix and $\underline{u}_2$ being a definite vector, both of which result from a matrix decomposition of a nozzle matrix $\underline{B}$ to be carried out in accordance with the method of Singular Value Decomposition (SVD), which matrix contains as elements the moment and force vectors which can be generated by the attitude-control propulsion units, and finally c is so selected that all of the actuating signals are non-negative.

**7.** Apparatus according to claim 6, **characterised in that** the conversion device has a memory which can be overwritten by remote control and which receives the actuating matrix $\underline{B}^{I}$ and the definite vector $\underline{u}_2$.

**8.** Method for controlling the attitude of a space vehicle relative to the three main axes of a coordinate system fixedly associated with the space vehicle, comprising the steps:

- generation of $n_A$ axis-related controller signals from axis-related measurement signals,

- generation, from the axis-related controller signals, of non-negative actuating signals associated with $n_D$ attitude-control propulsion units,

- generation of positive and negative moments about the three main axes by means of attitude-control propulsion units,

**characterised in that**
$n_D$ actuating signals are calculated from the $n_A$ axis-related controller signals and each one of the $n_D$ actuating signals is conveyed to a respective one of the $n_D$ attitude-control propulsion units.

**9.** Method for controlling the position of a space vehicle, comprising the steps:

- generation of $n_A$ axis-related controller signals from axis-related measurement signals,

- generation, from the axis-related controller signals, of non-negative actuating signals associated with $n_D$ attitude-control propulsion units,

- generation of positive and negative forces along the main axes by means of attitude-control propulsion units,

**characterised in that**
$n_D$ actuating signals are calculated from the $n_A$ axis-related controller signals and each one of the $n_D$ actuating signals is conveyed to a respective one of the $n_D$ attitude-control propulsion units.

**10.** Method according to claim 8 or 9, **characterised in that** a conversion of the $n_A$ controller signals into $n_D=n_A+1$ actuating signals is effected.

**11.** Method according to any one of claims 8 to 10, **characterised in that** the attitude-control propulsion units are operated in pulsed manner and each of the actuating signals is conveyed to exactly one modulator, the modulator effecting a modulation of the actuating signals in order to generate pulse sequences.

**12.** Method according to any one of claims 8 to 11, **characterised in that** the actuating signals that form the components of an actuating vector $\underline{k}$ are generated with the application of a precept

$$\underline{k} = \underline{B}^{I}\underline{e} + c\underline{u}_{2},$$

an actuating matrix $\underline{B}^{I}$, a definite vector $\underline{u}_{2}$ and a constant c resulting from the application of a matrix decomposition in accordance with the method of Singular Value Decomposition (SVD) to a nozzle matrix $\underline{B}$ which contains as elements the moment and force vectors which can be generated by the attitude-control propulsion units, the actuating matrix $\underline{B}^{I}$ being multiplied directly by the vector $\underline{e}$ formed from the axis-related controller signals.

13. Method according to claim 12, **characterised in that** the actuating matrix $\underline{B}^{I}$ and the definite vector $\underline{u}_{2}$ are overwritten by remote control.

**Revendications**

1. Dispositif pour le réglage de l'attitude d'un engin spatial en fonction des trois axes principaux d'un système de coordonnées fixement affecté à l'engin spatial et pour le réglage de la position de l'engin spatial,

   - avec un régulateur (1) générant $n_A$ signaux de réglages se référant aux axes, à partir de signaux de mesure se référant aux axes,
   - avec $n_D$ moteurs de réglage de l'attitude pour la génération de moments positifs et négatifs autour des trois axes principaux et pour la génération de forces positives et négatives le long des axes principaux,
   - avec une unité de transformation (5) pour la génération de signaux de commande non négatifs affectés aux moteurs de réglage de l'attitude, à partir des signaux de réglage se référant aux axes,

   **caractérisé en ce que** l'unité de transformation (5) contient des organes de calcul (6, 9, 11, 12) qui transforment les $n_A$ signaux de réglage se référant aux axes en $n_D$ signaux de commande, lesquels sont respectivement affectés à un moteur précis pour le réglage de l'attitude et qui les mettent à disposition à une sortie (14) de l'unité de transformation (5), pour un transfert ultérieur aux moteurs de réglage de l'attitude.

2. Dispositif selon la revendication 1, **caractérisé en ce que** $n_D = n_A + 1$ moteurs de réglage de l'attitude sont prévus et **en ce que** les organes de calcul (6, 9, 11, 12) sont conçus pour la transformation de $n_A$ signaux de réglage en $n_D = n_A + 1$ signaux de commande.

3. Dispositif selon l'une quelconque des revendications 1 ou 2, **caractérisé en ce que** les moteurs de réglage de l'attitude sont conçus sous forme de tuyères, lesquelles sont conçues pour un fonctionnement en mode pulsé et **en ce que** l'unité de transformation (5) est reliée avec un ensemble de modulateurs (20) lequel est à nouveau relié avec les moteurs de réglage de l'attitude, l'ensemble de modulateurs (20) présentant des modulateurs individuels et un modulateur étant respectivement associé de manière fixe à un signal de commande et à un moteur de réglage de l'attitude.

4. Dispositif selon l'une quelconque des revendications 1 ou 2, **caractérisé en ce que** les moteurs de réglage de l'attitude sont conçus sous forme de tuyères, elles-mêmes conçues pour un fonctionnement continu.

5. Dispositif selon l'une quelconque des revendications 1 ou 2, **caractérisé en ce que** les moteurs de réglage de l'attitude sont conçus sous forme de moteurs électriques pour le réglage de l'attitude.

6. Dispositif selon l'une quelconque des revendications 1 à 5, **caractérisé en ce que** le dispositif de transformation est conçu pour réaliser une opération selon la consigne

$$\underline{K} = \underline{B}^{I}\,\underline{e} + c\underline{u}_{2}$$

$\underline{K}$ étant le vecteur de commande contenant les signaux de commande en tant que composantes et $\underline{e}$ étant le vecteur contenant en tant que composantes les signaux de réglage se référant aux axes, $\underline{B}^{I}$ étant par ailleurs une matrice de commande et $\underline{u}_{2}$ étant un vecteur défini, tous deux résultant d'une décomposition d'une matrice de tuyère $\underline{B}$ qui doit être réalisée selon la méthode de la Singular Value Decomposition (SVD) et qui contient en tant qu'éléments les vecteurs de moments et les vecteurs de force qui peuvent être générés par les moteurs de réglage de l'attitude et enfin c étant choisi de manière à ce que tous les signaux de commande soient non négatifs.

7. Dispositif selon la revendication 6, **caractérisé en ce que** le système de transformation présente une mémoire pouvant être écrasée par télécommande et destinée à recevoir la matrice de commande $\underline{B}^I$, ainsi que le vecteur défini $\underline{u}_2$.

8. Procédé pour le réglage de l'attitude d'un engin spatial, en fonction des trois axes principaux d'un système de coordonnées affecté de manière fixe à l'engin spatial, comprenant les étapes suivantes :

   - Génération de $n_A$ signaux de réglage se référant aux axes, à partir de signaux de mesure se référant aux axes
   - Génération de $n_D$ signaux de commande non négatifs affectés à des moteurs de réglage de l'attitude, à partir des signaux de réglage se référant aux axes.
   - Génération de moments positifs et négatifs autour des trois axes principaux, à l'aide de moteurs de réglage de l'attitude,

   **caractérisé en ce que** $n_D$ signaux de commande sont calculés à partir des $n_A$ signaux de réglage se référant aux axes et que chacun des $n_D$ signaux de commande est respectivement amené à l'un des $n_D$ moteurs de réglage de l'attitude.

9. Procédé pour le réglage de la position d'un engin spatial, comprenant les étapes suivantes :

   - Génération de $n_A$ signaux de réglage se référant aux axes, à partir de signaux de mesure se référant aux axes
   - Génération de $n_D$ signaux de commande non négatifs affectés à des moteurs de réglage de l'attitude, à partir des signaux de réglage se référant aux axes.
   - Génération de forces positives et négatives le long des axes principaux, à l'aide de moteurs de réglage de l'attitude,

   **caractérisé en ce que** $n_D$ signaux de commande sont calculés à partir des $n_A$ signaux de réglage se référant aux axes et **en ce que** chacun des $n_D$ signaux de commande est respectivement amené à l'un des $n_D$ moteurs de réglage de l'attitude.

10. Procédé selon l'une quelconque des revendications 8 ou 9, **caractérisé en ce qu'**on assiste à une transformation des $n_A$ signaux de réglage en $n_D=n_A+1$ signaux de commande.

11. Procédé selon l'une quelconque des revendications 8 à 10, **caractérisé en ce que** les moteurs de réglage de l'attitude sont exploités en mode pulsé et **en ce que** chacun des signaux de commande est amené à un modulateur précis, le modulateur procédant à une modulation des signaux de commande pour la génération de suites d'impulsions.

12. Procédé selon l'un quelconque des revendications 8 à 11, **caractérisé en ce que** les signaux de commande, qui constituent les composantes d'un vecteur de commande $\underline{K}$ sont générés sous application d'une consigne

$$\underline{K} = \underline{B}^I\,\underline{e} + c\underline{u}_2$$

une matrice de commande $\underline{B}^I$, un vecteur défini $\underline{u}_2$, ainsi qu'une constante c résultant de l'application d'une décomposition de matrice selon la méthode de la Singular Value Decomposition (SVD) sur une matrice de tuyère $\underline{B}$, laquelle contient en tant qu'éléments les vecteurs de moments et les vecteurs de forces pouvant être générés par les moteurs de réglage de l'attitude, la matrice de commande $\underline{B}^I$ étant directement multipliée par le vecteur $\underline{e}$, formé à partir des signaux de réglage se référant aux axes.

13. Procédé selon la revendication 12, **caractérisé en ce que** la matrice de commande $\underline{B}^I$, ainsi que le vecteur $\underline{u}_2$ sont écrasés par télécommande.